# EUROPEAN PATENT APPLICATION

(11) **EP 3 340 637 A1**
(43) Date of publication of application: **27.06.2018**
(21) Application number: 16306736.6
(22) Date of filing: 20.12.2016
(51) Int. Cl.: H04N 21/433, H04N 21/439, H04N 21/44, H04N 21/442, H04N 21/45, H04N 21/458, H04N 21/462, H04N 21/472, H04N 21/482, H04N 21/488, H04N 21/84

(54) **AUTOMATIC ALERT TO START AN AUDIO/VISUAL PROGRAM**

(71) Applicant: Thomson Licensing, 92130 Issy-les-Moulineaux (FR)
(72) Inventor: ELUARD, Marc, 35576 Cesson-Sévigné (FR); JEANNE, Ludovic, 35576 Cesson-Sévigné (FR); LOEFFLER, Siegfried, 92443 Issy-les-Moulineaux (FR); VIGOUROUX, Jean-Ronan, 35576 Cesson-Sévigné (FR)
(74) Representative: Huchet, Anne

(57) **Abstract**

A method and device is provided for of determining broadcast content availability. In one embodiment. The method comprises receiving a user selection for broadcast display of a program. The broadcast content includes a plurality of associated criteria. The user selection criteria is then analyzed to determine its characteristics. The method also includes continuously monitoring broadcast program dataflow to detect changes to the selected user program and updating information affecting broadcast of the selected user program upon detecting any changes.

## Description

### TECHNICAL FIELD

The present disclosure generally relates to consumer electronics and, more specifically, to automatically staring audio/visual programs on consumer electronics devices.

### BACKGROUND

Electronic Program Guides (EPGs) have become ubiquitous since their release in early 1980s. A more modern form of the EPG, associated with both television and radio broadcasting, is the interactive program guide (IPG) which allows media users such as television viewers and radio listeners to navigate scheduling information menus interactively. Users of media, including but not limited to television and radio, can obtain broadcast information using EPG/IPGs through their published menus. These menus may also provide other related information regarding current broadcast and upcoming scheduled programming and content. Some guides also feature backward scrolling to promote past content for catch up purposes. In addition, non-interactive electronic program guides (sometimes known as "navigation software") are also available for television and radio, and consist of a digitally displayed, non-interactive menu of program scheduling information shown by a cable or satellite television provider to its viewers on a dedicated channel.

Typically, EPGs and IPGs are transmitted by specialized video character generation (CG) equipment housed within a provider's central (headend) facility. Traditionally, the menu is displayed by tuning into an EPG or IPG channel(s). The menu displayed then lists current and upcoming television programs on all available channels provided to the user through user's subscription or otherwise, traditionally ahead of time, to allow the user ample notice to record or watch the desired program.

Unfortunately, the information provided to EPGs/IPGs are often dated and not up to the minute. Programming schedules change often and suddenly due to breaking news, over-extended games or a number of other foreseen and unforeseen events. Therefore, the dynamic nature of such programming can interfere with pre-recorded programming or even user's in-person viewing needs and schedule.. Consequently, improved techniques are desirous that can increase reliability.

### SUMMARY

A first aspect relates to a method for determining broadcast content availability. The method comprises receiving a user selection for broadcast display of a program. The broadcast content has a plurality of associated criteria. The user selection and the associated criteria are analyzed to determine monitoring characteristics. The method also includes monitoring broadcast program dataflow to detect changes to the selected user program and updating information affecting broadcast of the selected user program upon detecting any changes. The monitoring may be continuous

A second aspect relates to a device comprising a control module configured to activate a device responsive to a user selection for broadcast display of a program. The broadcast content has a plurality of associated criteria. An analysis module is also provided for determining characteristics relating to said user selection and associated criteria, as well as a tracking module for continuously monitoring program dataflow based on the criteria to detect changes to the selected user program. The control module is configured to update information about the broadcast when it is modified.

### BRIEF DESCRIPTION OF THE DRAWINGS

The teachings of the present embodiments can be readily understood by considering the following detailed description in conjunction with the accompanying drawings, in which:
FIG. 1 is a block diagram of a home theater system in accordance with the present embodiments;
Figure 2 is a flow chart depiction for sending alerts upon modification of a planned future broadcast according to one embodiment;
Figure 3 is a flow chart depiction for determining content availability according to one embodiment.
Figure 4 is a smart module having a distributed configuration according to one embodiment;
Figure 5 is a schematic block diagram of the elements of a computer system as used in conjunction with the smart module according to one embodiment;
Figure 6 is a block diagram of a smart startup module in accordance with the present embodiments; and
Figure 7 is a schematic block diagram of an exemplary processing system according to one embodiment for smart module of Figure 6.

To facilitate understanding, identical reference numerals have been used, where possible, to designate identical elements that are common to the figures.

### DETAILED DESCRIPTION OF PREFERRED EMBODIMENTS

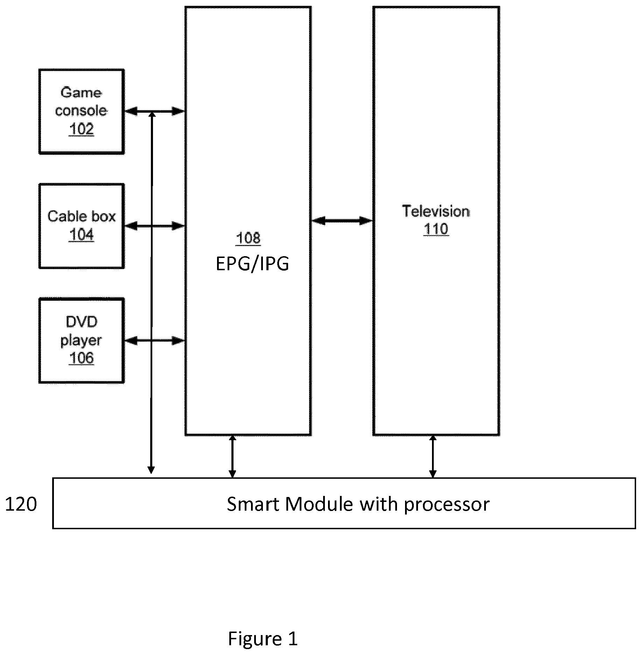

Figure 1 is block diagram depicting an exemplary home theater arrangement 100 that uses an EPG/IPG in association with a variety of consumer electronics devices such as for example a game console 102, a cable box 104, and a DVD player 106, a television 112 and the like using an EPG or IPG menu based system. EPGs/IPGs information is traditionally transmitted by specialized video character generation equipment housed within each such provider's central headend facility. By tuning into an EPG channel, a menu is displayed that lists current and upcoming television programs on all available channels. Data used to populate EPG/IPG are often implemented on equipment connected directly or through a computer to the content provider. Recently, content may also be distributed over the Internet, either for a charge or free of charge with programming and information also being distributed by content provider computers over the Internet. Traditionally, television-based EPGs/IPGs with Program Delivery Control (PDC) technology can also be used to facilitate the selection of programs for recording with digital video recorders (DVRs), also known as personal video recorders (PVRs). EPG/IPGs can also use gateways, set top boxes and other modern audio/visual equipment such as those utilizing high-definition multimedia interface (HDMI) to communicate between content sources (such as, e.g., a cable box or media player, and a visual display and/or speaker).

EPG and IPG can be practical tools when they are reliable. However, there are many instances when a user can encounter that the EPG/IPG program slot is empty and not updated in real time. In addition, it is not uncommon to see a time lag between the EPG and real broadcast program. Furthermore, a typical IPG provides information covering only a span of seven or 14 days and information beyond that is not always available.

In many instances, EPG/IPG programs are not completely up to date. In some cases the programming change is dynamic and due to unforeseen events such last minute breaking news programs, last minute live events or over time plays in games. In other instances, the EPG/IPG is not updated on a timely basis. In such instances, the modification of broadcast program is not performed dynamically but rather some days or hours ahead of time. In such a case, the time for alteration and modification of previously published broadcast schedule could have been easily performed. Nonetheless, due to limitations and cost constraints, the modification of published broadcast scheduling of current or future events become difficult.

Another problem with current EPG/IPG is that even when the menu is updated after a modification to the scheduled programming, any previously scheduled recording by the user still remains unchanged unless and until the user become aware of a change and makes a modification in person. For example, if on 11/11/2016 the user selects to record the movie "Galaxy" between 9:30 to 11:30 am and the broadcast schedule is then updated on 11/14/2016 so that the movie is broadcast instead between 10 am and noon, the previous user selected schedule selection would not be updated. In such a case, the user will later discover that there will be unwanted content between 9:30 and 10 am and the ending of the movie (content between 11:30 and noon) was not recorded as any such recording would have stopped at 11:30. This unsatisfactory outcome, unfortunately, is often the case.

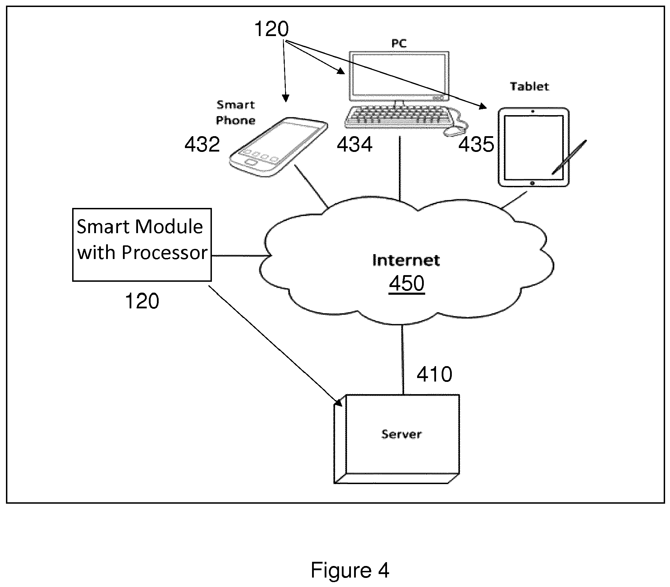

To address these and other issues, a smart module as shown in Figure 1 at 120 can be used. The module 120 can be free standing or be a part of another device, such as a gateway, a mobile device such as a smart phone or a computer with streaming capabilities. It can also be part of a console, cable box, television or other such devices as can be appreciated. The module 120 can alternatively not be unitary device but be a series of distributed components that are dispersed or housed on other devices. Some such embodiments are represented by the schematic block diagram of Figure 4.

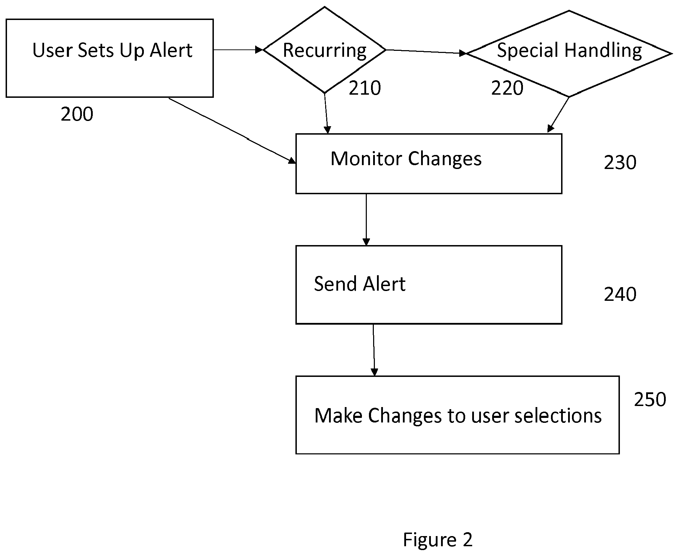

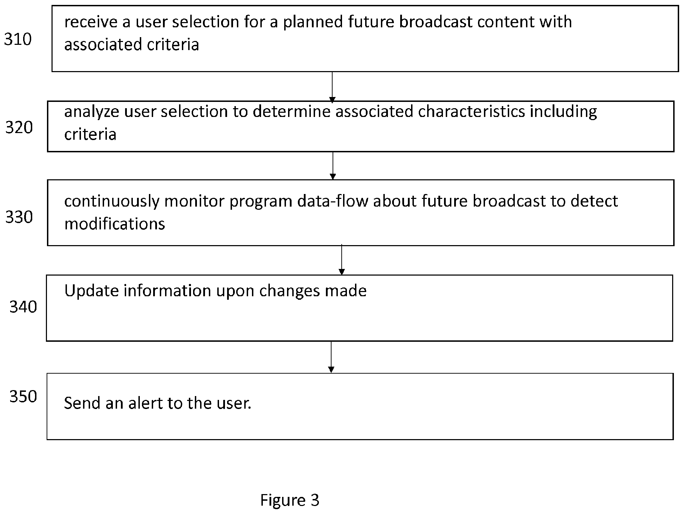

Figure 2 is a flow chart depiction of a method according to one embodiment, using the smart module 120. In step 200, a user is provided the ability to create alerts on programs that the user likes to watch or records. This alert will not be based on the EPG/IPG alone as will be discussed in conjunction with Figure 3, but the EPG/IPG can be used for easy selection.

Figure 3 provides another flowchart depiction according to one embodiment. In Figure 3, user selections and alerts can be set up as discussed in Figure 2. These selections are then received in step 310, such as by a processor. The user defines a particular to be broadcast program. When selecting programs that will be broadcasted in the future or that are being currently broadcasted, the users may search programming by time, title, channel or genre using an input device such as a keypad, computer keyboard or television remote control. Therefore, such selections can be received from any of such input devices and including any such search criteria. The program that is currently being broadcast or that will be broadcast in the future, therefore will include one or more such associated criteria. To aid understanding, it should be noted that criteria can include broadcasting time, day or even network or internet site through which the broadcast or recorded stream will become available. However, criterial does not have to be limited to this. Other information can be alternatively used as can be appreciated, for example, broadcast time or network channel can be replaced by all basketball games on any network or ice skating championships broadcast only on Sundays.

In step 320, the user selection and its associated criterial are analyzed to determine particular characteristics that will be used in step 330 for continuous monitoring. In one embodiment, as discussed broadcast data-flows are examined for any alterations or possible broadcast scheduling (in the first place) that was not available at time of user selection. When new information becomes available or when there are modifications, such information and content is altered accordingly so that viewing and recording information can remain up-to-date. This is captured by the modification step 340. An alert can then be sent optionally as provided in step 350.

Looking back to Figure 2, some of the specifics of these alerts, as provided in step 350 of Figure 3, can be also set up by the user (or by default when there are no user selections). In one embodiment discussed in Figure 2, the user can have different ways to set up alerts. For example, a first way may include selecting the program on an EPG/IPG. In this example, the program and the channel on which it will be broadcast is known, at least for the time being. In such a case, a device such like any local equipment (STB) can be used to make a program analysis. It may be the case that only the programming stream corresponding to this channel has to be analyzed. This program may be a one-time event or a recurring event. In case the program is a one-time event, the alert will only be observed for that event. If the program is a recurring event, an alert will be created for each programming instance as shown in step 210. Other arrangements can also be made. For example, the alert may be generated only in conjunction with new recordings. Alternatively, an alert may be provided despite a non-recording decision. To aid understanding, an example can be provided. A user decides to record a recurring one hour program called "Horror House". A new or first run showing occurs every Monday at 8pm and lasts for an hour. However, on some weeks, the network may choose to run a re-run of a previous episode in place of a first run episode. The user may only select to run the "first run" episodes. In a first alternative, the alert will only be placed in conjunction to the "first run" episodes. In an alternate situation, while only "first run" episodes are recorded and recording schedule is monitored and altered appropriately if there is a dynamic scheduling change, the user will still be alerted in a number of situations even when a re-run episode is being broadcast that week. The alert may include information about a re-run episode being broadcast instead of a first run episode, or a scheduling change even though the program will not be recorded as selected previously by the user. This is demonstrated generally in Figure 2 in step 220 that determines any special handling.

In one embodiment, the special handling step 220 may also require additional steps. This will be established by determination of step 200. In step 200, a number of analysis can be set up depending on the number of searches that need to be performed. In one embodiment, the content is characterized based on the search. In other words, the characterization of the content is made by looking through its signature and then searching for the signature in the data (flow). To ease understanding, an example can be used. In this example, for a movie or program to be searched, the characterization is made through the title. In this example, the title can be retrieved with optical character recognition (OCR) technology into the program (e.g. subtitles). For sports or music, in on embodiment, it may be necessary to also to go through a characterization of the audio portion. For example, the sound variations characterize very well and can distinguish between a tennis match with the impact of balls in the racket as opposed to an opera. Therefore, step 200 and 220 may have to be combined when changes are made that does not originally only depend on the EPG/IPG program guide.

In another embodiment, it is further possible to combine several characterizations to do one search or create more generic alerts. For example, For *Star Wars,* it is possible to combine OCR with the generic name of movies and audio with the theme of the saga. It is also possible to detect an emission about *Star Wars* with the audio characterization.

In yet another embodiment, the analysis can be conducted by using other resources. For example, the alert can relates to an actor, so that the name of a movie or other search can be found in the stream and the list of actors of the film in a website. In another embodiment, the alert may include and inform the user that a program that monitors is being broadcast, it is possible to display the equivalent of a pop up on television or on his phone via an ad-hoc service.

It should be noted that as discussed, a number of ways may be used to perform and monitor changes. These other ways as briefly discussed allow one or more users to monitor, modify or set up alerts on programs that are not necessarily programmed into an EPG. It is further possible to set alerts with a more generic criterion. For example by specifying a type of sport (tennis), a series of film (Star Wars), a band (Moonspell), etc. In this case, there is too much data flows for the local equipment, so it is the equipment of the broadcaster to analyze. An analysis must be implemented by stream transmitted (by channel). In one embodiment, the analysis can be performed as was discussed in conjunction with Figure 3.

Now returning back to step 230 of Figure 2, no matter what the search or alert characterization and specification may be, the method as provided in step 230 continues monitoring on a dynamic basis of the changes made to the selected criteria. As soon as the changes are made, the user is sent an alert and the changes are automatically made to preselected or other selected actions (i.e. recording) as shown in steps 240 and 250 respectively. The user will have the option of receiving the alerts or not receiving the alerts and only opting out for the changes to be made automatically. In other embodiment, the alerts may be sent in some circumstances as preselected by the user. These steps can be performed as part of the setting up of the alert as discussed in conjunction with step 200.

Referring now to Figures 4-6, additional details on the smart module 120 is shown. It should be understood that the smart module 120 may be implemented as a single device or even a processor, as described herein, or may, in alternate embodiments, have its functions split between multiple devices in multiple locations (e.g., in a single home network or in a cloud computing environment).

In Figure 4, for example, in a distributed embodiment, the smart module 120 may be split across multiple distinct devices such as a gateway (represented by keyboard 434), a mobile device such as smart phone 432 or a server 410 or a computer or even a tablet 435 and even be part of a cloud computing solution 450. It should be understood that the different functions of the smart startup module 120 may be distributed in any appropriate way.

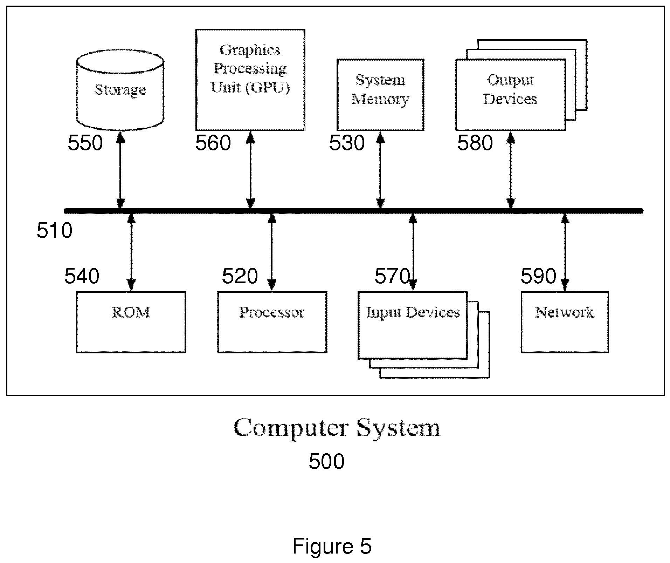

In Figure 5, a schematic block diagram of the elements of a computer system 500 such as one that can be used in conjunction with the smart module 120 of Figure 4, is provided. The computer system 500 may be implemented using various appropriate devices. For instance, the computer system may be implemented using one or more personal computers ("PC"), servers, mobile devices (e.g., a Smartphone), tablet devices, and/or any other appropriate devices. The various devices may work alone (e.g., the computer system may be implemented as a single PC) or in conjunction (e.g., some components of the computer system may be provided by a mobile device while other components are provided by a tablet device). The computer system 100 may include one or more bus or bus systems such as depicted by 510, at least one processing element 520, a system memory 530, a read-only memory ("ROM") 540 , other components (e.g., a graphics processing unit) 560, input devices 570, output devices 580, permanent storage devices 530, and/or a network connection 590. The components of computer system may be electronic devices that automatically perform operations based on digital and/or analog input signals.

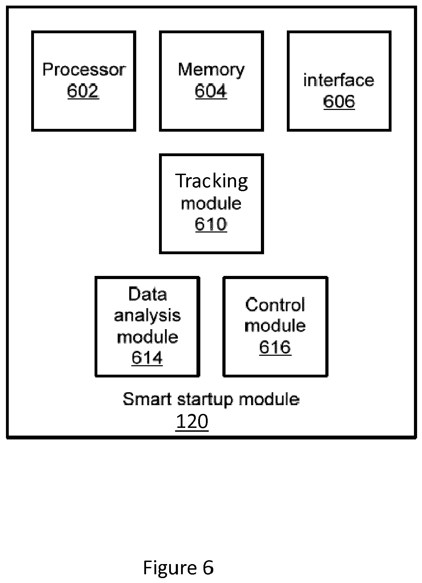

In Figure 6, the smart module 120 includes a hardware processor 602 and a memory 604. In addition, the smart module 120 includes an interface 606 or other communications interface that allows the smart startup module 120 to communicate with the connected devices. It should be understood that at least the HDMI interface 606 will be physically connected to, or incorporated within, at least one of the connected devices. In addition, the smart module 120 includes one or more functional modules. These functional modules may be implemented as, e.g., software that is stored in memory 604 and executed by processor 602. In alternate embodiments, the functional modules may be implemented as one or more discrete hardware components in the form of, e.g., application specific integrated chips or field programmable gate arrays.

A control module 616 receives user selection and provides it to a data analysis module 614 for analysis to determine associated characteristics including criteria. A tracking module 610 continuously monitor broadcast data flows about future broadcasts with respect to determined characteristics. The control module 616 then determines the appropriate action to take, for example modifying information when a change in original content, information or associated broadcast scheduling time has been detected and sending an alert to the user when appropriate.

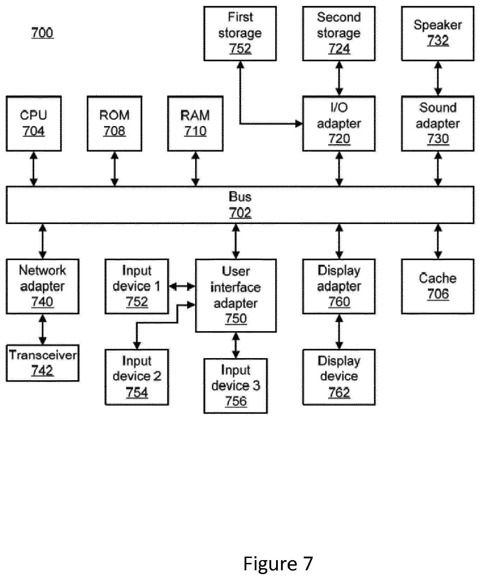

Referring now to Figure 7, an exemplary processing system 700 is shown which may represent the smart module 120. The processing system 700 includes at least one processor (CPU) 704 operatively coupled to other components via a system bus 702. A cache 706, a Read Only Memory (ROM) 708, a Random Access Memory (RAM) 710, an input/output (I/O) adapter 720, a sound adapter 730, a network adapter 740, a user interface adapter 750, and a display adapter 760, are operatively coupled to the system bus 702.

A first storage device 722 and a second storage device 724 are operatively coupled to system bus 702 by the I/O adapter 720. The storage devices 722 and 724 can be any of a disk storage device (e.g., a magnetic or optical disk storage device), a solid state magnetic device, and so forth. The storage devices 722 and 724 can be the same type of storage device or different types of storage devices.

A speaker 732 is operatively coupled to system bus 702 by the sound adapter 730. A transceiver 742 is operatively coupled to system bus 702 by network adapter 740. A display device 762 is operatively coupled to system bus 702 by display adapter 760.

A first user input device 752, a second user input device 754, and a third user input device 756 are operatively coupled to system bus 702 by user interface adapter 750. The user input devices 752, 754, and 756 can be any of a keyboard, a mouse, a keypad, an image capture device, a motion sensing device, a microphone, a device incorporating the functionality of at least two of the preceding devices, and so forth. Of course, other types of input devices can also be used, while maintaining the scope of the present principles. The user input devices 752, 754, and 756 can be the same type of user input device or different types of user input devices. The user input devices 752, 754, and 756 are used to input and output information to and from system 700.

Of course, the processing system 700 may also include other elements (not shown), as readily contemplated by one of skill in the art, as well as omit certain elements. For example, various other input devices and/or output devices can be included in processing system 700, depending upon the particular implementation of the same, as readily understood by one of ordinary skill in the art. For example, various types of wireless and/or wired input and/or output devices can be used. Moreover, additional processors, controllers, memories, and so forth, in various configurations can also be utilized as readily appreciated by one of ordinary skill in the art. These and other variations of the processing system 700 are readily contemplated by one of ordinary skill in the art given the teachings of the present principles provided herein.

A number of implementations have been described. Nevertheless, it will be understood that various modifications may be made. For example, elements of different implementations may be combined, supplemented, modified, or removed to produce other implementations. Additionally, one of ordinary skill will understand that other structures and processes may be substituted for those disclosed and the resulting implementations will perform at least substantially the same function(s), in at least substantially the same way(s), to achieve at least substantially the same result(s) as the implementations disclosed. Accordingly, these and other implementations are contemplated by this disclosure and are within the scope of this disclosure.

## Claims

1. A method of determining broadcast content availability, comprising:
receiving (310) a user selection for broadcast display of a program, wherein broadcast content of said program has a plurality of associated criteria;
analyzing (320) said user selection and said associated criteria to determine monitoring characteristics;
monitoring (330) broadcast program dataflow based on said monitoring characteristics to detect changes to said user selected program; and
updating (340) information affecting broadcast of said user selected program upon detecting any changes.

2. The method of claim 1, further comprising sending said user an alert informing said user of any updating.

3. A device, comprising:
a control module (616) configured to activate a device responsive to a user selection for broadcast display of a program, wherein broadcast content of said program has a plurality of associated criteria;
an analysis module (614) for determining monitoring characteristics relating to said user selection and associated criteria;
a tracking module (610) for monitoring program dataflow based on said monitoring characteristics to detect changes to said selected user program; and
said control module (616) also configured to update information about said user selected program when said user selected program is modified.

4. The device of claim 3, wherein said control module is further configured to send said user an alert informing said user of any updating.

5. The method of claim 1 or 2 or the device of claim 3 or 4, wherein said broadcast display is a future recording.

6. The method of claim 1, 2 or 5 or the device of claims any one of claims 3 to 5, wherein said monitoring characteristics are provided by analyzing previous user selections.

7. The method of claim 1, 2, 5 or 6 or the device of claims any one of claims 3 to 6, wherein said user monitoring characteristics are provided by analyzing user selection of broadcast content.

8. The method of any one of claims 1-2, and 5-7 or the device of claims any one of claims 3 to 7, wherein analyzing said user selection and associated criteria is made by examining an electronic program guide (EPG).

9. The method of any one of claims 1-2, and 5-8 or the device of claims any one of claims 3 to 8wherein analyzing said user selection criteria is made by examining an interactive program guide (IPG).

10. The method of any one of claims 1-2, and 5-9, wherein said monitoring step is performed by analyzing streaming content.

11. The method of any one of claims 1-2, and 5-10, wherein said detected changes affects a plurality of associated future programs and said plurality of associated programs are all modified.

12. The method of any one of claims 1-2, and 5-11 and the device of any one of claims 3 to 9, wherein a different alert is sent for each modified associated program.

13. The method of any one of claims 1-2, and 5-12 and the device of any one of claims 3 to 9 and 12, wherein a single alert is sent for all modified associated programs.

14. The method or device of claim 12 or 13, wherein said modification is only made in conjunction with first run broadcasts and said alert is only generated for first run broadcasts.

15. A computer program product for a programmable apparatus, the computer program product comprising a sequence of instructions for implementing a method according to any one of claims 1-2, and 5-14 when loaded into and executed by the programmable apparatus.
